# EUROPÄISCHE PATENTSCHRIFT

(11) **EP 1 270 055 B1**
(45) Veröffentlichungstag und Bekanntmachung des Hinweises auf die Patenterteilung: **15.07.2009**
(21) Anmeldenummer: 02450139.7
(22) Anmeldetag: 18.06.2002
(51) Int. Cl.: B01D 17/00, B01D 17/028, B01D 17/032, B01D 21/02, E03F 5/16, C02F 1/40

(54) **Schlamm- und Ölabscheider für Abwasser**
Sludge und oil separator for waste water
Séparateur de boues et d'huile pour eaux usées

(30) Priorität: 25.06.2001 AT 9702001
(43) Veröffentlichungstag der Anmeldung: 02.01.2003
(73) Patentinhaber: SW Umwelttechnik Österreich GmbH, 9020 Klagenfurt (AT)
(72) Erfinder: Ofner, Hubert Ing., 8413 St. Georgen (AT)
(74) Vertreter: Beer, Manfred

(56) Entgegenhaltungen:
- DE-A- 19 718 215
- DE-A- 19 847 978
- US-A- 3 710 949
- US-A- 4 151 075
- US-A- 5 120 435

## Beschreibung

Um vorteilhafte Abscheidebedingungen für einen Schlamm- und Ölabscheider dieser Art zu schaffen, ist es bekannt (AT 405 066 B), ein zylindrisches Auffangbecken in einen einen Schlammfang bildenden Grobabscheideraum und einen Feinabscheideraum zu unterteilen, der mit dem Grobabscheideraum über einen Überlauf verbunden ist. Der Feinabscheideraum bildet wiederum eine überlaufseitige Ölabscheidekammer und eine einen Ablauf aufweisende Ablaufkammer, wobei zwischen der Ablaufkammer und der Ölabscheidekammer eine Plattenabscheideeinrichtung in Form eines in Strömungsrichtung abwärts geneigten Strömungskanals mit mehreren übereinander angeordneten, strömungsparallelen Abscheideplatten angeordnet ist. Die Plattenabscheideeinrichtung wird als vorgefertigte Baueinheit in eine Aufnahmeöffnung einer den Feinabscheideraum in die Ölabscheidekammer und die Ablaufkammer unterteilende Trennwand eingesetzt. Während das Abwasser aus der Ölabscheidekammer zwischen den schräg abwärts führenden Abscheideplatten der Plattenabscheideeinrichtung in die Ablaufkammer strömt, sammeln sich Restölteilchen an der oberen Platte der jeweils einen Strömungsdurchtritt begrenzenden Plattenpaare, wogegen mitgeführte Feststoffteilchen gewichtsbedingt gegen die untere Abscheideplatte absinken und mit dem Abwasser in die Ablaufkammer ausgetragen werden. Die Ölteilchen wandern entgegen der Strömungsrichtung aufwärts in die Ölabscheidekammer zurück, wo sie sich mit der bereits auf dem Abwasser aufschwimmenden Ölschicht vereinigen. Das von Öl und Schlamm gereinigte Abwasser steigt in der Ablaufkammer auf und fließt über den Ablauf ab, wogegen das aufschwimmende Öl aus der Ölabscheidekammer und dem mit der Ölabscheidekammer über den Überlauf verbundenen Grobabscheideraum fallweise ausgetragen wird. Durch die Unterteilung des Abscheidebeckens in einen Grobabscheideraum und einen Feinabscheideraum sowie des Feinabscheideraumes in eine Ölabscheidekammer und eine Ablaufkammer ist der mit diesen bekannten Schlamm- und Ölabscheidern verbundene Konstruktionsaufwand nicht unerheblich.

Zum Abtrennen von Schwebstoffen aus Abwässern ist es bekannt (DE 42 31 790 A), eine Plattenabscheideeinrichtung mit einem in Strömungsrichtung ansteigenden Strömungskanal einzusetzen, der durch eine

Die Erfindung bezieht sich auf einen Schlamm- und Ölabscheider für Abwasser mit einem einen Schlammfang bildenden Absetzraum für über einen Abwasserzulauf zugeführtes Abwasser, mit einer an eine Ölabscheidekammer angeschlossenen Plattenabscheideeinrichtung, die aus einem geneigten, in Strömungsrichtung ansteigenden Strömungskanal mit mehreren in einem gegenseitigen Abstand nebeneinandergereihten, strömungsparallelen Abscheideplatten besteht, und mit einem Ablauf für in der Ölabscheidekammer vom Öl getrenntes Abwasser. Mehrzahl von strömungsparallelen Abscheideplatten in nebeneinandergereihte Teilkanäle unterteilt ist, sodass die Schwebstoffe und Schmutzteilchen entgegen der Strömungsrichtung in den Teilkanälen abgetrennt werden und sich in dem die Plattenabscheideeinrichtung aufnehmenden Behälter absetzen. Der Behälter, der die Plattenabscheideeinrichtung als Einsatz aufnehmen kann, stellt eine gesonderte Baueinheit dar, an die über einen Ablauf einerseits ein Ölabscheider und anderseits ein Koaleszenzabscheider angeschlossen werden, was einen erheblichen Bauaufwand mit einem entsprechenden Platzbedarf mit sich bringt.

Aus der DE 197 18 215 A ist ein als Vorklärer bestimmter Schlamm- und Ölabscheider für Abwasser mit einem einen Schlammfang bildenden Absetzraum für über einen Abwasserzulauf zugeführtes Abwasser, mit einer an eine Ölabscheidekammer angeschlossenen Plattenabscheideeinrichtung, die aus einem geneigten, in Strömungsrichtung ansteigenden, Strömungskanal mit mehreren in einem gegenseitigen Abstand nebeneinandergereihten, strömungsparallelen Abscheideplatten besteht, und mit einem Ablauf für in der Ölabscheidekammer vom Öl getrenntes Abwasser, wobei die Plattenabscheideeinrichtung zwischen dem Absetzraum und der Ölabscheidekammer angeordnet ist, bekannt.

Bei der DE 197 18 215 A wird aus dem in Fig. 3 gezeigten, als Vorklärer dienenden, Behälter das Oberflächenwasser mit den aufschwimmenden Stoffen von einem Ansaugschwimmer abgesaugt und über eine Leitung dem Reaktor zugeführt. Eine endgültige Trennung in Klarwasser einerseits und aufschwimmende Stoffe anderseits erfolgt erst im Reaktor mit Hilfe von Luftflotation.

Die US-A-3 710 949 beschreibt einen Abscheider mit einem einen Schlammfang bildenden Absetzraum für über einen Abwasserzulauf zugeführtes Abwasser, mit einer an eine Ölabscheidekammer angeschlossenen Plattenabscheideeinrichtung, die aus einem geneigten, in Strömungsrichtung ansteigenden Strömungskanal mit mehreren in einem gegenseitigen Abstand nebeneinandergereihten, strömungsparallelen Abscheideplatten besteht, und mit einem Ablauf für in der Ölabscheidekammer vom Öl getrenntes Abwasser, wobei die vom Absetzraum getrennte Ölabscheidekammer oberhalb des Schlammfanges angeordnet ist, zwischen dem Absetzraum und der Ölabscheidekammer die Plattenabscheideeinrichtung angeordnet ist und der Ablauf mit dem Bodenbereich der Ölabscheidekammer, in dem sich neben dem in die Ölabscheidekammer ragenden Teil der Plattenabscheideeinrichtung eine beruhigte Zone ergibt, in Strömungsverbindung steht.

Der Erfindung liegt die Aufgabe zu Grunde, einen Schlamm- und Ölabscheider für Abwasser der eingangs geschilderten Art so auszugestalten, dass die Konstruktion wesentlich vereinfacht werden kann, ohne eine Beeinträchtigung der Abscheidewirkung befürchten zu müssen.

Die Erfindung löst die gestellte Aufgabe dadurch, dass der eingangs genannte Schlamm- und Ölabscheider die Merkmale des Patentanspruches aufweist.

Da zufolge dieser Maßnahmen nur mehr ein als Ölabscheidekammer dienender, an den Ablauf anzuschließender Einsatz für den Absetzraum erforderlich ist, in den das Abwasser zum Abscheiden von Schlamm und Öl eingeleitet wird, ergeben sich besonders einfache Konstruktionsverhältnisse, zumal der Einsatz als vorgefertigte Baueinheit lediglich in einen den Absetzraum bildenden Behälter einzufügen ist. Durch den Einbau der Ölabscheidekammer oberhalb des sich im Bodenbereich des Absetzraumes ergebenden Schlammfanges wird das Absetzen der Feststoffteilchen durch die Abwasserströmung aus dem Absetzraum in die Ölabscheidekammer nicht beeinträchtigt. Das in einer Aufwärtsströmung durch die Abscheideplatten der Plattenabscheideeinrichtung in die Ölabscheidekammer fließende Wasser unterstützt die Ölmitnahme in die Ölabscheidekammer, während mitgeführte Feststoffteilchen schwerkraftbedingt gegen die untere Abscheideplatte der jeweils einen Strömungsdurchtritt bildenden Plattenpaare absinken und aufgrund der im Plattenbereich geringen Strömungsgeschwindigkeit entgegen der Strömungsrichtung entlang der Abscheideplatten wieder in den Absetzraum absinken. Allenfalls in die Ölabscheidekammer gelangende, feinkörnige Feststoffreste können sich in der Ölabscheidekammer absetzen. Es braucht daher nur mehr dafür gesorgt zu werden, dass der Abfluss unterhalb der aufschwimmenden Ölschicht an die Ölabscheidekammer angeschlossen wird, um einen konstruktiv einfachen, funktionssicheren und wirkungsvollen Schlamm- und Ölabscheider zu erhalten.

Da die Plattenabscheideeinrichtung in den Boden der Ölabscheidekammer eingesetzt ist, ergeben sich für eine möglichst kompakte Baueinheit des Einsatzes besonders vorteilhafte Konstruktionsverhältnisse. Im Bodenbereich der Ölabscheidekammer ergibt sich neben dem in die Ölabscheidekammer ragenden Teil der Plattenabscheideeinrichtung eine beruhigte Zone, aus der das Abwasser zum Ablauf geführt wird. Zu diesem Zweck könnte die Ölabscheidekammer vom Abfluss durch eine Tauchwand abgetrennt werden. Man erhält einfachere Konstruktionsbedingungen, da der Ablauf über ein Tauchrohr mit der Ölabscheidekammer verbunden wird.

In der Zeichnung ist der Erfindungsgegenstand beispielsweise dargestellt.

Es zeigte:
Fig. 1 einen erfindungsgemäßen Schlamm- und Ölabscheider für Abwasser in einem vereinfachten Axialschnitt und

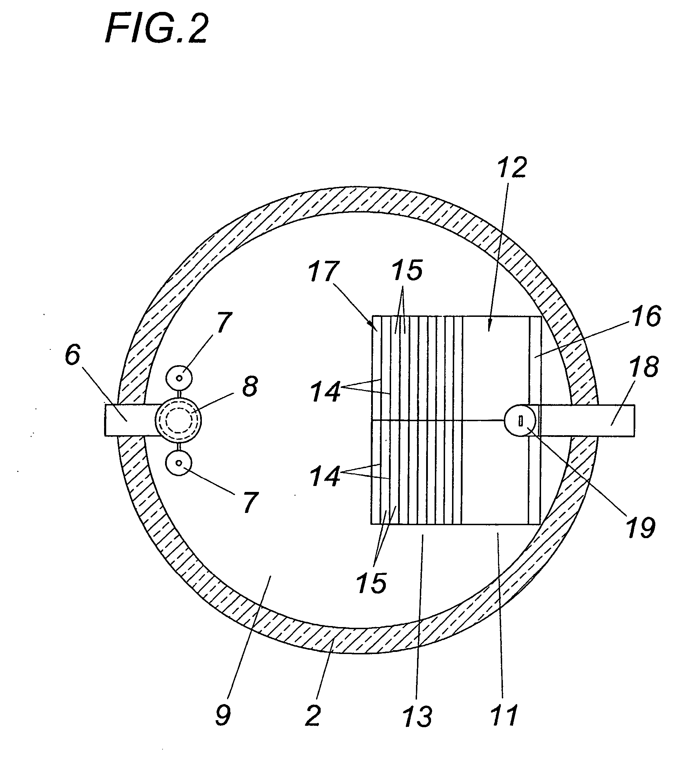

Fig. 2 diesen Abscheider in einem schematischen Schnitt nach der Linie II-II der Fig. 1.

Der Schlamm- und Ölabscheider gemäß dem dargestellten Ausführungsbeispiel weist einen auf eine Sockelplatte 1 aufgesetzten, zylindrischen Behälter 2 auf, der aus Beton gefertigt ist und einen Deckel 3 mit zwei Zugangsöffnungen 4 und 5 trägt. An den die Behälterwand durchsetzenden Abwasserzulauf 6 schließt ein über Schwimmer 7 betätigbares Zulaufventil 8 an, das den Abwasserzulauf 6 sperrt, wenn die auf dem Abwasser im Behälter 2 aufschwimmende Ölschicht eine vorgegebene Höhe übersteigt.

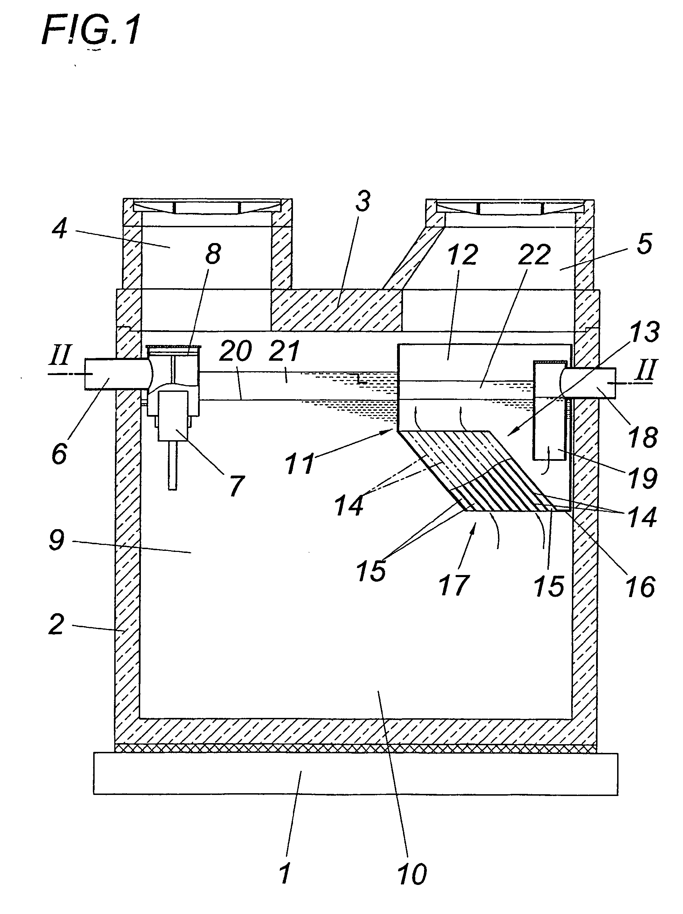

Der Behälter 2 bildet für das zulaufende Abwasser einen Absetzraum 9, der im Bodenbereich einen Schlammfang 10 darstellt. Mit Abstand oberhalb dieses Schlammfanges 10 ist im Bereich der einen Zugangsöffnung 5 ein Einsatz 11 vorgesehen, der eine vom Absetzraum 9 getrennte Ölabscheidekammer 12 aufnimmt, die mit dem Absetzraum 9 durch eine Plattenabscheideeinrichtung 13 verbunden ist. Die Plattenabscheideeinrichtung 13 besteht aus mit Abstand voneinander angeordneten, parallelen Abscheideplatten 14, die zwischen sich Strömungsdurchtritte 15 begrenzen. Wie der Fig. 1 entnommen werden kann, bilden diese Strömungsdurchtritte 15 einen vom Boden 16 der Ölabscheidekammer 12 schräg aufwärts geneigten, unterteilten Strömungskanal 17, der unterhalb eines Ablaufes 18 für das von Schlamm und Öl gereinigte Abwasser in der Ölabscheidekammer 12 mündet. Dieser Ablauf 18 ist an ein Tauchrohr 19 in der Ölabscheidekammer 12 angeschlossen, das sich seitlich neben der Plattenabscheideeinrichtung 13 gegen den Boden 16 der Ölabscheidekammer 12 erstreckt.

Im Absetzraum 9 des Behälters 2 sinken die Feststoffe des über den Abwasserzulauf 6 eingebrachten Abwassers in den Bereich des Schlammfanges 10 ab, wogegen ein Teil des mit dem Abwasser mitgeführten Öls nach oben aufschwimmt und auf dem Abwasserspiegel 20 eine Ölschicht 21 bildet. Durch zulaufendes Abwasser wird ein Teil des Abwassers aus dem Absetzraum 9 über die Plattenabscheideeinrichtung 13 in die Ölabscheidekammer 12 verdrängt, wobei in den Strömungsdurchtritten 15 zwischen je zwei Abscheideplatten 14 die Trennung des Restöls und des noch nicht abgesetzten, feinkörnigen Feststoffanteils unterstützt wird. Die innerhalb der Teilströmungen des Abwassers aufsteigenden Ölreste sammeln sich ja entlang der jeweils oberen Abscheideplatte 14, wogegen die Feststoffteilchen aus den aufwärts gerichteten Teilströmungen gegen die jeweils untere Abscheideplatte 14 wandern. Die sich im Bereich der jeweils oberen Abscheideplatten 14 der Strömungsdurchtritte 15 sammelnden Ölreste werden in Richtung der Abwasserströmung in die Ölabscheidekammer 12 ausgetragen und bilden in der Ölabscheidekammer 12 eine Ölschicht 22, während die sich im Bereich der jeweils unteren Abscheideplatten sammelnden Feststoffteilchen entgegen der Strömungsrichtung in den Absetzraum 9 schwerkraftbedingt absinken. Die in die Ölabscheidekammer 12 strömende Abwassermenge verdrängt einen Teil des gereinigten Abwassers aus dem Tauchrohr 19 in den Ablauf 18, aus dem das gereinigte Abwasser abfließt. Durch entsprechende Strömungspfeile sind die wesentlichen Strömungswege durch die Plattenabscheideeinrichtung 13 und die Ölabscheidekammer 12 in der Fig. 1 eingezeichnet. Über die Zugangsöffnungen 4 und 5 des Behälterdeckels 3 kann die anfallende Ölschicht 21 bzw. 22 abgezogen werden. Durch diese Zugangsöffnungen 4 und 5 ist auch ein Schlammaustrag möglich.

## Patentansprüche

1. Schlamm- und Ölabscheider für Abwasser mit einem in einem Behälter (2) vorgesehenen, einen Schlammfang (10) bildenden Absetzraum (9) für über einen Abwasserzulauf (6) zugeführtes Abwasser, mit einer an eine Ölabscheidekammer (12) angeschlossenen Plattenabscheideeinrichtung (13), die aus einem geneigten, in Strömungsrichtung ansteigenden Strömungskanal (17) mit mehreren in einem gegenseitigen Abstand nebeneinandergereihten, strömungsparallelen Abscheideplatten (14) besteht und zwischen dem Absetzraum (9) und der Ölabscheidekammer (12) angeordnet ist, wobei die Ölabscheidekammer (12) in einem oberhalb des Schlammfanges (10) im Absetzraum (9) angeordneten Einsatz (11) vorgesehen ist, und mit einem Ablauf (18) für in der Ölabscheidekammer (12) vom Öl getrenntes Abwasser, wobei der Ablauf (18) mit einem Bodenbereich der Ölabscheidekammer (12) in Strömungsverbindung steht, wobei der die Ölabscheidekammer (12) aufnehmende Einsatz (11) als vorgefertigte Baueinheit in den Absetzraum (9) bildenden Behälter (2) eingefügt ist, und die Ölabscheidekammer (12) vom Absetzraum (9) getrennt ist, die Plattenabscheideinrichtung (13) in den Boden (16) der Ölabscheidekammer (12) eingesetzt ist, und der Ablauf (18) über ein Tauchrohr (19), das sich seitlich neben der Plattenabscheideeinrichtung (13) gegen den Boden (16) der Ölabscheidekammer (12) erstreckend vorgesehen ist, mit einem Bodenbereich der Ölabscheidekammer (12), in dem sich neben dem in die Ölabscheidekammer (12) ragenden Teil der Plattenabscheideeinrichtung (13) eine beruhigte Zone ergibt, verbunden ist.

## Claims

1. Sludge and oil separator for waste water comprising a sedimentation chamber (9) provided in a container (2), forming a sludge collector (10), for waste water supplied via a waste water inlet (6), comprising a plate separating unit (13) connected to an oil separating chamber (12), which consists of an inclined flow channel (17) rising in the direction of flow, comprising a plurality of separating plates (14) arranged parallel to the flow, in rows adjacent to one another and mutually spaced apart, and which is arranged between the sedimentation chamber (9) and the oil separating chamber (12), the oil separating chamber (12) being provided in an insert (11) arranged above the sludge collector (10) in the sedimentation chamber (9), and comprising an outlet (18) for waste water separated from the oil in the oil separating chamber (12), the outlet (18) being in fluidic connection with a base region of the oil separating chamber (12), the insert (11) receiving the oil separating chamber (12) being installed as a pre-fabricated unit into the container (2) forming the sedimentation chamber (9), and the oil separating chamber (12) being separated from the sedimentation chamber (9), the plate separating unit (13) being inserted into the base (16) of the oil separating chamber (12) and the outlet (18) being connected via an immersion pipe (19), which is provided extending laterally in the vicinity of the plate separating unit (13) towards the base (16) of the oil separating chamber (12), to a base region of the oil separating chamber (12) in which a settling zone is produced in the vicinity of the part of the plate separating unit (13) protruding into the oil separating chamber (12).

## Revendications

1. Séparateur de boue et d'huile pour eaux usées, avec un espace de dépôt (9) formant un collecteur de boue (10) prévu dans un récipient (2), pour l'eau usée acheminée par une arrivée d'eau usée (6), avec un dispositif séparateur à plaques (13) relié à une chambre séparatrice pour l'huile (12), ledit dispositif étant constitué d'un canal d'écoulement incliné (17), ascendant dans le sens d'écoulement, avec des plaques séparatrices (14) parallèles à l'écoulement, rangées les unes à côté des autres avec un espacement réciproque, et disposé entre l'espace de dépôt (9) et la chambre séparatrice pour l'huile (12), la chambre séparatrice pour l'huile (12) étant prévue dans un insert (11) disposé au-dessus du collecteur de boue (10) dans l'espace de dépôt (9), et avec une sortie (18) pour l'eau usée séparée de l'huile dans la chambre séparatrice pour l'huile (12), la sortie (18) se trouvant en liaison fluidique avec une région de fond de la chambre séparatrice pour l'huile (12), l'insert (11) accueillant la chambre séparatrice pour l'huile (12) étant inséré en tant qu'unité de construction préfabriquée dans le récipient (2) formant l'espace de dépôt (9), la chambre séparatrice pour l'huile (12) étant séparée de l'espace de dépôt (9), le dispositif séparateur à plaques (13) étant intégré dans le fond (16) de la chambre séparatrice pour l'huile (12), et la sortie (18) étant reliée à une région de fond de la chambre séparatrice pour l'huile (12), dans laquelle est formée une zone de calme à côté de la partie du dispositif séparateur à plaques (13) qui s'introduit dans la chambre séparatrice pour l'huile (12), par le biais d'un tube plongeur (19) qui s'étend latéralement à côté du dispositif séparateur à plaques (13), contre le fond (16) de la chambre séparatrice pour l'huile (12).
